(19) **Europäisches Patentamt European Patent Office Office européen des brevets**

(11) **EP 4 596 498 A1**

(12) **EUROPEAN PATENT APPLICATION**
published in accordance with Art. 153(4) EPC

(43) Date of publication:
06.08.2025 Bulletin 2025/32

(21) Application number: 23872534.5

(22) Date of filing: 28.09.2023

(51) International Patent Classification (IPC):
*C01G 23/053* (2006.01)

(52) Cooperative Patent Classification (CPC):
C01G 23/053

(86) International application number:
PCT/JP2023/035454

(87) International publication number:
WO 2024/071312 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022156733

(71) Applicant: JGC Catalysts and Chemicals Ltd.
Kawasaki-shi, Kanagawa 212-0013 (JP)

(72) Inventors:
• HORI, Kunio
  Kitakyushu-shi, Fukuoka 808-0027 (JP)
• SHIMIZU, Takehiro
  Kitakyushu-shi, Fukuoka 808-0027 (JP)
• MURAGUCHI, Ryo
  Kitakyushu-shi, Fukuoka 808-0027 (JP)

(74) Representative: Gille Hrabal
Partnerschaftsgesellschaft mbB
Patentanwälte
Brucknerstraße 20
40593 Düsseldorf (DE)

(54) **CRYSTALLINE TITANIUM OXIDE CORE-SHELL PARTICLES AND DISPERSION CONTAINING SAME**

(57) The present invention addresses the problem of providing particles having low photocatalytic activity and a high refractive index by forming an amorphous layer that contains Si and Ti on the surface of crystalline titanium oxide. The problem is solved by core-shell particles wherein the core particles are crystalline titanium oxide and the shell is an amorphous layer that contains Si and Ti.

FIG.1

SHELL : AMORPHOUS LAYER
( Si / Ti )

CORE PARTICLE :
CRYSTALLINE TITANIUM OXIDE

EP 4 596 498 A1

**Description**

TECHNICAL FIELD

The present invention relates to core-shell particles containing crystalline titanium oxide and a dispersion containing the same.

BACKGROUND ART

Crystalline titanium oxide is mixed into a coating solution or a resin composition for use as a high refractive index filler. Such a coating solution or resin is used in various applications and in particular preferably used as a coating solution for forming a coating for high refractive index optical base materials such as spectacle lenses. Optical lens films require transparency and therefore crystalline titanium oxide having a small particle size is preferably used. However, crystalline titanium oxide having a small particle size has high photocatalytic activity, which deteriorates coatings or coated base materials through a photocatalytic reaction. This lowers weather resistance or light resistance of the coatings to cause peeling off or easily cause yellow or blue discoloration of the coatings.
As a means for improving weather resistance while suppressing film deterioration, Patent Document 1 describes a coating film containing inorganic oxide fine particles obtained by coating surfaces of titanium oxide-containing core particles with a coating layer of a composite oxide composed of silicon oxide and zirconium oxide and/or aluminum oxide. Patent Document 2 describes titanium oxide superfine particles obtained by coating titanium oxide surfaces with amorphous zirconium oxide, and a coating solution containing the fine particles. Further, Patent Document 3 discloses core-shell composite oxide fine particles obtained by coating with a shell composed of a composite oxide containing silicon and aluminum as its main components, the particles containing silicon and aluminum at their oxide-based weight ratio $(SiO_2/Al_2O_3)$ of 2.0 to 30.0.

CITATION LIST

PATENT DOCUMENTS

Patent Document 1: JP 2006-146131 A
Patent Document 2: JP 2004-018311 A
Patent Document 3: JP 2011-37659 A

SUMMARY OF THE INVENTION

PROBLEM TO BE SOLVED BY THE INVENTION

It has heretofore been known that photocatalytic activity of crystalline titanium oxide is suppressed by forming a coating on its surface. Formation of the coating reduces the photocatalytic activity but also reduces refractive index.

MEANS FOR SOLVING THE PROBLEM

The inventors of the present invention have made an intensive study to solve the problem described above and completed the present invention.
The present invention provides the following (1) and (10).

(1) Core-shell particles, each including:

a core particle composed of crystalline titanium oxide; and
a shell having an Si- and Ti-containing amorphous layer.

(2) The particles according to (1) above, wherein the amorphous layer has a ratio of Si to Ti ranging from 0.1 to 10 in terms of signal ratio obtained by energy dispersive X-ray spectrometry.
(3) The particles according to (1) or (2) above, wherein the amorphous layer has a thickness of 0.1 nm to 5 nm.
(4) The particles according to any one of (1) to (3) above, wherein the particles have an average particle size of 5 nm or more but 50 nm or less.

(5) The particles according to any one of (1) to (4) above, wherein the crystalline titanium oxide contains at least one element selected from the group consisting of Al, Si, Fe, and Zr.

(6) The particles according to any one of (1) to (5) above, wherein the crystalline titanium oxide has an anatase crystal structure.

(7) The particles according to any one of (1) to (6) above, wherein the crystalline titanium oxide does not contain Sn.

(8) A dispersion obtained by dispersing the particles according to any one of (1) to (7) above in a solvent.

(9) A coating containing the particles according to any one of (1) to (7) above.

(10) A base material including the coating according to (9) above.

EFFECT OF THE INVENTION

Particles having low photocatalytic activity and a high refractive index can be obtained by forming an Si- and Ti-containing amorphous layer on crystalline titanium oxide surfaces.

BRIEF DESCRIPTION OF THE DRAWINGS

[FIG. 1] FIG. 1 is an image diagram of a particle of the invention.
[FIG. 2] FIG. 2 is a dark field scanning transmission electron microscope (STEM) image of particles in Example 1.

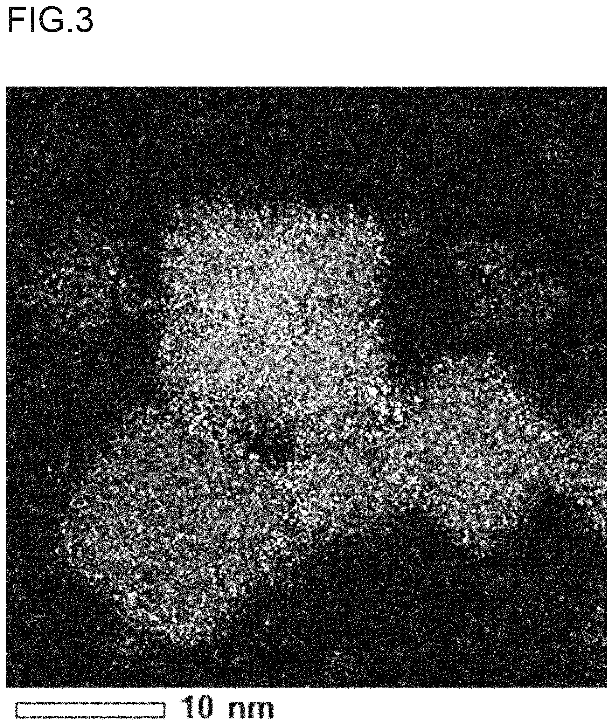

[FIG. 3] FIG. 3 is a mapping image of elements (Si and Ti) of the particles in Example 1.

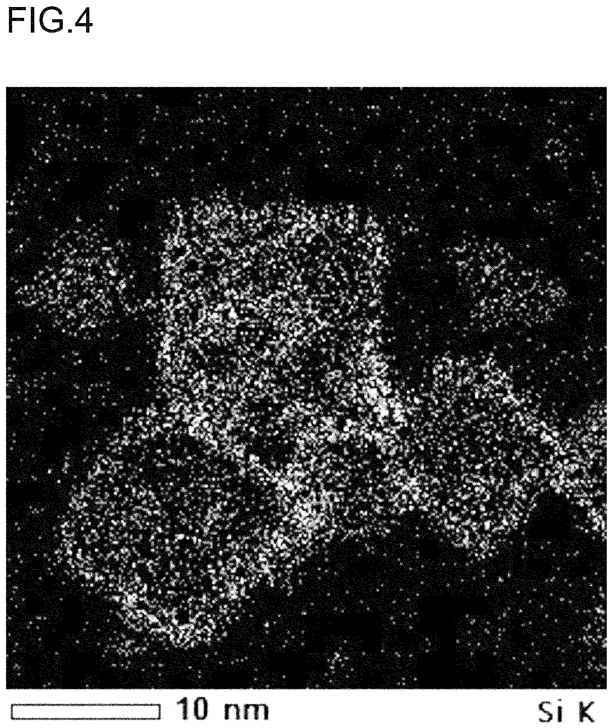

[FIG. 4] FIG. 4 is a mapping image of the element (Si) of the particles in Example 1.

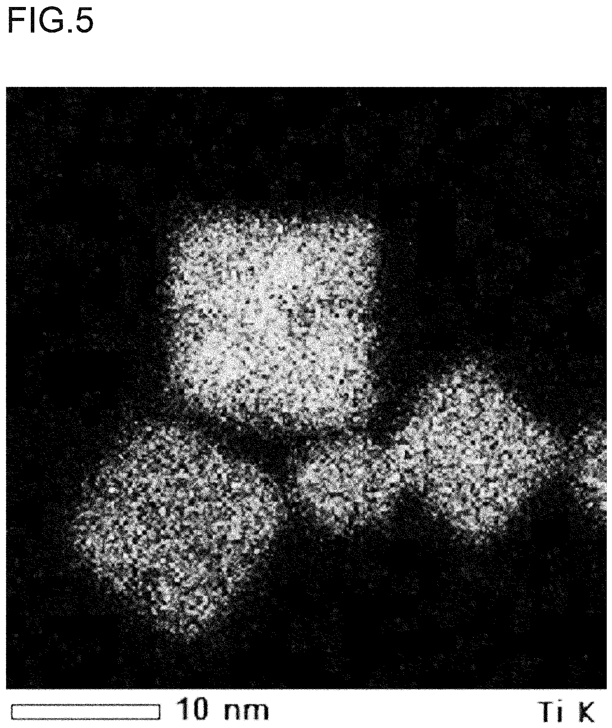

[FIG. 5] FIG. 5 is a mapping image of the element (Ti) of the particles in Example 1.

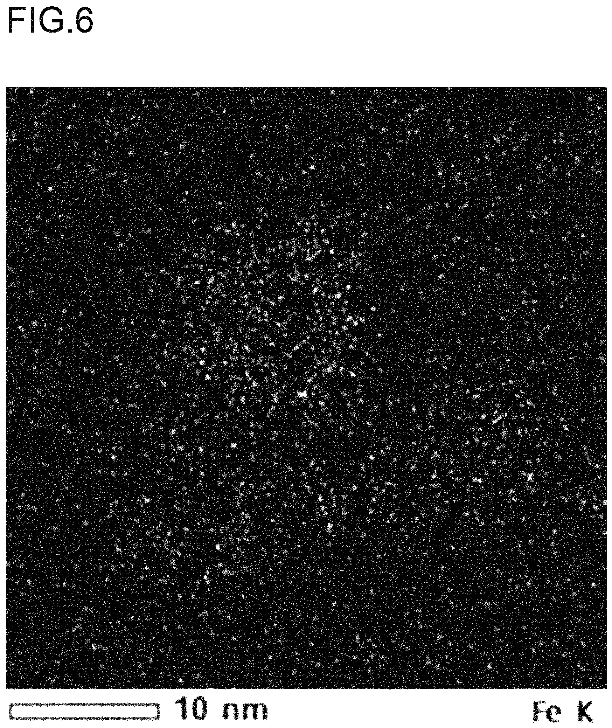

[FIG. 6] FIG. 6 is a mapping image of an element (Fe) of the particles in Example 1.

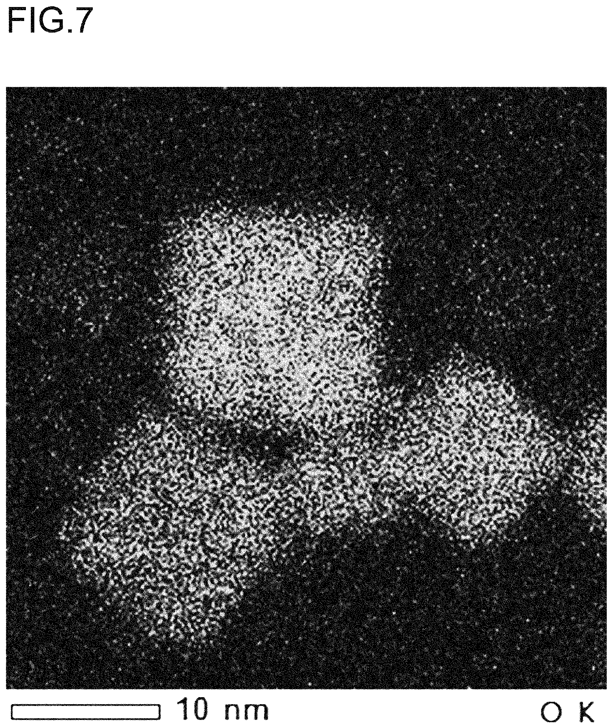

[FIG. 7] FIG. 7 is a mapping image of an element (O) of the particles in Example 1.
[FIG. 8] FIG. 8 is a line analysis profile of the particles in Example 1.

DESCRIPTION OF EMBODIMENTS

In the following, a general description will be given of particles of the invention.

[General description of particles of invention]

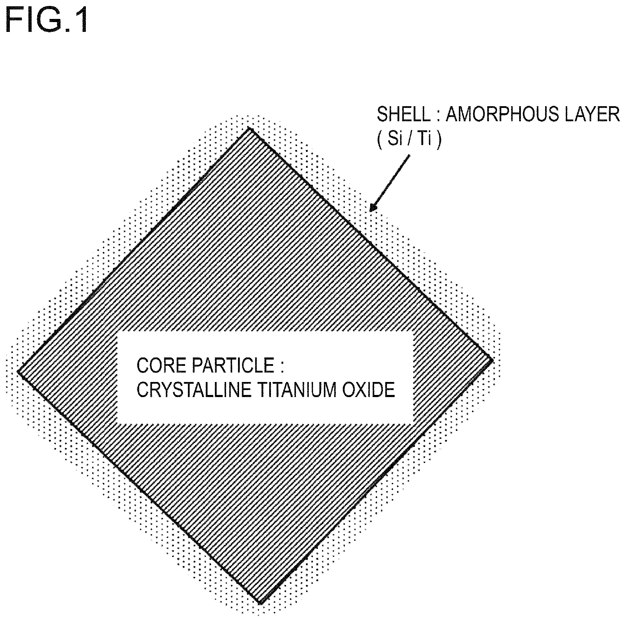

The particles of the invention are core-shell particles, each including: a core particle composed of crystalline titanium oxide; and a shell having an Si- and Ti-containing amorphous layer. Its image is shown in FIG. 1.

[Particles of invention]

The particles of the invention will be described below in detail.

The particles of the invention are core-shell particles. In the practice of the invention, a core-shell particle refers to a particle in which at least a part of a surface of a core-forming particle (core particle) is covered with a shell. In the particles of the invention, the whole surfaces of the core particles are preferably covered with their corresponding shells. When the whole surfaces of the core particles are covered with their corresponding shells, photocatalytic activity of the core particles is particularly suppressed.

In the particles of the invention, the core particles are composed of crystalline titanium oxide. The crystalline titanium oxide is titanium oxide having a crystal structure such as anatase, rutile, or brookite, and is characterized in that the refractive index is high due to the crystal structure. Advantage is taken of this feature to use the inventive particles as a filler of coatings for high refractive index optical base materials such as spectacle lenses. However, the particles decompose organic substances (e.g., resins) contained in the coatings and the base materials through photocatalytic reaction. The particles of the invention can suppress decomposition of organic substances through photocatalytic reaction because crystalline titanium oxide surfaces are covered with their corresponding shells. This photocatalytic reaction is derived from photocatalytic activity of crystalline titanium oxide, and crystalline titanium oxide having an anatase type crystal structure particularly has strong photocatalytic activity. The particles of the invention can suppress photocatalytic activity even if the core particles are composed of crystalline titanium oxide having the anatase type crystal structure. The crystal structure of crystalline titanium oxide can be specified by diffraction peaks obtained by X-ray diffraction measurement.

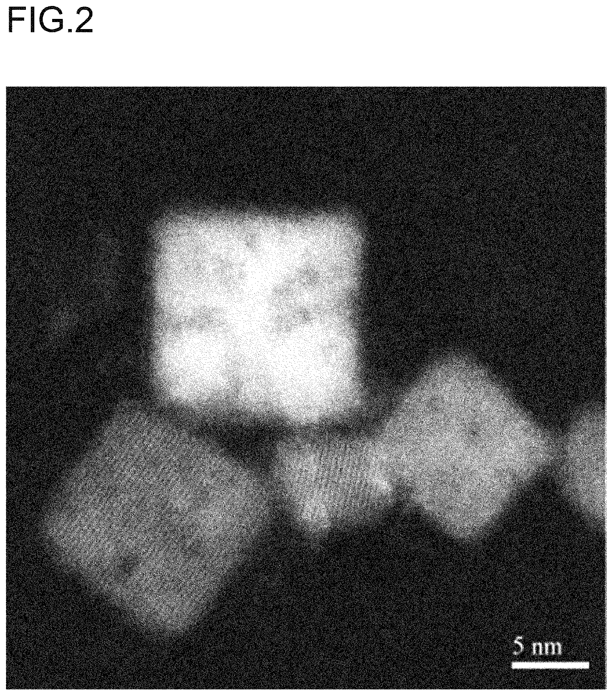

In each of the particles of the invention, the shell is in the form of an Si- and Ti-containing amorphous layer. In the invention, "amorphous" refers to a state in which atoms are arranged in a disorderly manner, unlike the above-mentioned crystalline titanium oxide. Because the layer is in the state in which atoms are arranged in a disorderly manner, clear diffraction peaks do not appear in X-ray diffraction unlike the above-mentioned crystalline titanium oxide. Therefore, a transmission electron microscope (TEM) is used to determine whether it has an amorphous layer. Amorphous substances are different from crystalline substances in that lattice fringes do not appear. For example, in the STEM image shown in FIG. 2, lattice fringes can be seen in the crystalline titanium oxide core particles, while layers having no lattice fringe can be seen at their surfaces. In each of the particles of the invention, the above-mentioned amorphous layer may contain other elements than Si and Ti. For example, elements such as O, Na, K, Al, Fe, and Zr may be contained. In each of the particles of the invention, the amorphous layer preferably contains at least one of Zr and **K**. Elements contained in the amorphous layer can be specified by energy dispersive X-ray spectrometry (EDX) line analysis using a transmission electron microscope. Specifically, an amorphous layer is specified from a TEM image and is subjected to line analysis. If character X-rays derived from elements are seen in the area of the amorphous layer, it can be determined that the elements are contained.

Each of the particles of the invention has an Si- and Ti-containing amorphous layer and is therefore capable of suppressing photocatalytic activity of core particles while increasing the refractive index of the core particles as well. In the invention, the refractive index of core particles greatly influences that of core-shell particles. For example, if the amorphous layer thickness is increased to suppress photocatalytic activity of core particles, the number of the core particles is reduced to decrease the refractive index of core-shell particles. It is considered that each of the particles of the invention has an Si- and Ti-containing amorphous layer serving as a shell and is therefore capable of increasing the refractive index of core-shell particles while suppressing photocatalytic activity of core particles even if the film is extremely thin. In the particles of the invention, the amorphous layer preferably has a thickness ranging from 0.1 nm to 5 nm, more preferably from 1 nm to 3 nm, and particularly preferably from 1.5 nm to 3 nm.

The thickness of the amorphous layer means a value obtained by measuring the amorphous layer thickness at 20 points per particle on the above-mentioned STEM image as shown in FIG. 2 and simply averaging measurement values.

In the particles of the invention, the ratio of Si to Ti (Si/Ti) in the Si- and Ti-containing amorphous layer in terms of signal ratio obtained by energy dispersive X-ray spectrometry is preferably in the range of 0.1 to 10, more preferably 0.5 to 5, and still more preferably 1 to 5, and particularly preferably 1 to 4. In the particles of the invention in which the signal ratio of the amorphous layer is within the above-defined ranges, photocatalytic activity is particularly reduced.

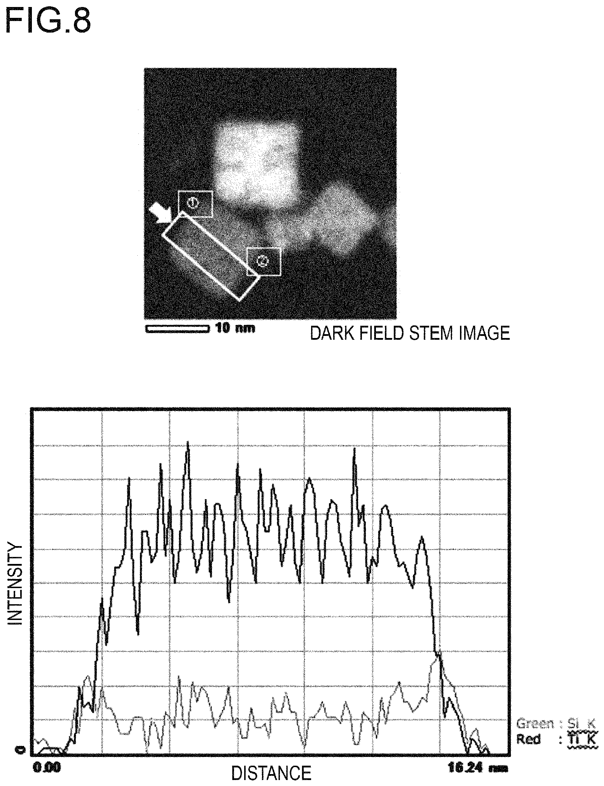

The signal ratio means a value obtained by measuring Si and Ti signals in the above-mentioned line analysis as shown in FIG. 8 and simply averaging the signal ratio at a distance corresponding to the thickness of the amorphous layer from the surface layer part of the amorphous layer.

The photocatalytic activity of the particles of the invention in terms of SY discoloration rate is preferably up to 50%, more preferably up to 30%, and particularly preferably up to 10%. Each of the particles of the invention has a core particle coated with an Si- and Ti-containing amorphous layer at its surface and is therefore capable of suppressing photocatalytic activity of the core particle.

The particles of the invention preferably have an average particle size of 5 nm to 50 nm, more preferably 5 nm to 30 nm, and particularly preferably 5 nm to 20 nm. When the average particle size of the particles of the invention is within the above-defined ranges, transparency is increased and compact films are easily formed, and therefore they can be suitably used in applications requiring transparency (e.g., optical application).

In addition to Ti and O which are constituents of titanium oxide, crystalline titanium oxide contained in the particles of the invention as their core particles preferably contains at least one element selected from Al, Si, Fe, and Zr. The photocatalytic activity of crystalline titanium oxide containing any of these elements is likely to be reduced. When having an anatase type crystal structure, the crystalline titanium oxide preferably contains at least one element of Si and Fe. The photocatalytic activity of the crystalline titanium oxide containing any of these elements is low and therefore that of the core-shell particles can be reduced even if the amorphous layer is thin. When having an anatase type crystal structure, the crystalline titanium oxide preferably does not contain Sn. When Sn is contained, the refractive index of the crystalline titanium oxide is likely to be reduced.

The particles of the invention preferably have a Ti content in terms of $TiO_2$ of 30 mass% to 99 mass%, more preferably 35 mass% to 90 mass%, and particularly preferably 40 mass% to 85 mass%. When the Ti content is within the above-defined ranges, the particles of the invention are likely to be particles having low photocatalytic activity and high refractive index.

The particles of the invention preferably have an Si content in terms of $SiO_2$ of 1 mass% to 50 mass%, more preferably 5 mass% to 45 mass%, and particularly preferably 10 mass% to 40 mass%. When the Si content is within the above-defined ranges, the particles of the invention are likely to be particles having low photocatalytic activity and high refractive index.

The particles of the invention preferably have an Fe content in terms of $Fe_2O_3$ of 0.1 mass% to 5 mass%, more preferably 0.1 mass% to 3 mass%, and particularly preferably 0.1 mass% to 1 mass%. When the Fe content is within the above-defined ranges, the particles of the invention are likely to have low photocatalytic activity.

The particles of the invention preferably have a Zr content in terms of $ZrO_2$ of 0.1 mass% to 20 mass%, and more preferably 1 mass% to 15 mass%. When the Zr content is within the above-defined ranges, the particles of the invention are likely to have low photocatalytic activity.

The particles of the invention preferably have a K content in terms of $K_2O$ of 0.1 mass% to 5 mass%, and more preferably 0.5 mass% to 3 mass%. When the K content is within the above-defined ranges, the particles of the invention are likely to have low photocatalytic activity.

The particles of the invention are preferably connected particles in which the particles of the invention as described above are connected to each other through the Si- and Ti-containing amorphous layer. When a coating is formed, its strength can be increased by containing such connected particles.

The particles of the invention may be in the form of powder or a dispersion of the particles dispersed in a solvent. In the case of the dispersion, it may be an aqueous dispersion, a dispersion in water and an organic solvent, or a dispersion in an organic solvent. In a dispersion containing an organic solvent as the dispersion medium, water contained in the dispersion can be, for example, partially or completely replaced with an organic solvent by a rotary evaporator, an ultrafiltration membrane, or any other known method. The particles of the invention are preferably contained in the dispersion in an amount of 1 mass% to 50 mass%, more preferably 5 mass% to 45 mass%, and particularly preferably 10 mass% to 40 mass%. When contained in the above-defined amounts, the particles of the invention are more likely to be dispersed. The dispersion may contain a matrix component (binder component). As the matrix component, use may be made of a common alkoxysilane compound, examples thereof including: tetraethoxysilane, methyltrimethoxysilane, vinyltrimethoxysilane, $\gamma$-methacryloxypropyltrimethoxysilane, trimethylchlorosilane, $\alpha$-glycidoxymethyltrimethoxysilane, $\alpha$-glycidoxyethyltrimethoxysilane, $\beta$-glycidoxyethyltrimethoxysilane, $\gamma$-glycidoxypropyltrimethoxysilane, $\gamma$-glycidoxypropyltriethoxysilane, $\gamma$-glycidoxypropylmethyldimethoxysilane, $\gamma$-glycidoxypropylmethyldiethoxysilane, $\beta$-(3,4-epoxycyclohexyl)-ethyltrimethoxysilane, $\beta$-(3,4-epoxycyclohexyl)-ethyltriethoxysilane, $\gamma$-aminopropyltrimethoxysilane, $\gamma$-aminopropyltriethoxysilane, N-$\beta$(aminoethyl)-$\gamma$-aminopropylmethyldimethoxysilane, and N-$\beta$(aminoethyl)-$\gamma$-aminopropylmethyldiethoxysilane. The particles of the invention contain the Si- and Ti-containing amorphous layer and is therefore easily immobilized in the above-mentioned matrix component.

The above-mentioned dispersion containing the particles of the invention can be used to form a coating on various base materials such as glass and plastic, thereby obtaining the base materials having the coating (referred to also as "coated base materials). The coated base materials can be used as optical base materials such as spectacle lenses and other various optical lenses in cameras and the like, front panels in optical displays, show window cases, window glasses, copier scan glasses, light covers for vehicles, and various UV blocking filters. The thickness of the coating is appropriately adjusted according to its application and is therefore not particularly limited. In a case where the coating strength is to be increased, the thickness is preferably 0.5 $\mu$m or more, more preferably 1 $\mu$m or more, and particularly preferably 2 $\mu$m or more. The upper limit of the coating thickness is not particularly limited and may be up to 100 $\mu$m, up to 50 $\mu$m, or up to 30um. In a case where there is no need to increase the coating strength, the coating thickness may be less than 0.5 $\mu$m, less than 0.3 $\mu$m, or less than 0.1 $\mu$m. Even if the coating is thin, the coating containing the particles of the invention has high weather resistance.

The particles of the invention can be produced by, for example, a method including the following steps. Specifically, the particles can be prepared by a production method which includes: a titanic acid aqueous solution preparing step in which hydrogen peroxide is added to hydrous titanic acid in gel or sol form to dissolve the hydrous titanic acid to thereby prepare a titanic acid aqueous solution; a precursor preparing step in which a silicon compound is added to the titanic acid aqueous solution to prepare a precursor; a reaction step in which the precursor is heated in an autoclave in a temperature range of 130°C to 180°C; and an amorphous layer forming step in which the temperature is reduced from the above temperature range to 50°C at a rate of 50°C/h or less. The production method will be described below in detail.

[Titanic acid aqueous solution preparing step]

The production method includes a titanic acid aqueous solution preparing step which includes adding hydrogen peroxide to hydrous titanic acid in gel or sol form to dissolve the hydrous titanic acid to thereby prepare a titanic acid aqueous solution. The hydrous titanic acid as use herein is a generic name containing titanium oxide hydrates or titanium hydroxide. The hydrous titanic acid can be prepared by any conventionally known method. For example, it can be prepared by alkali neutralization of a solution of titanium tetrachloride in water. Hydrogen peroxide is added to the hydrous titanic acid in gel or sol form or a mixture thereof to dissolve the hydrous titanic acid to thereby prepare a uniform aqueous solution. In this process, it is preferable to perform heating to 50°C or more, or stirring as required. The hydrous titanic acid preferably has a concentration in terms of $TiO_2$ of up to 10 mass%, and more preferably up to 5 mass%. The titanic acid aqueous solution can be prepared with high efficiency by using this method.

In this step, hydrogen peroxide is preferably added in an amount in terms of $H_2O_2/TiO_2$ mass ratio of 1 or more, and more preferably 2 to 6. Hydrogen peroxide need only be added in an amount sufficient to completely dissolve the hydrous titanic acid, and the hydrous titanic acid can be dissolved with high efficiency by adjusting the amount of addition in the above-defined ranges. In this step, it is important to completely dissolve the hydrous titanic acid in the aqueous solution.

[Precursor preparing step]

The production method includes a precursor preparing step which includes adding a silicon compound to the titanic acid aqueous solution to prepare a precursor. A conventionally known compound can be used for the silicon compound. For example, silica sol, a silicic acid solution (solution obtained by dealkalization of an alkali silicate), and an alkoxysilane can be used. The amounts of these compounds to be added can be appropriately adjusted according to the composition of the core-shell particles to be ultimately obtained.

In this step, a compound other than the silicon compound may also be added. For example, a compound containing Al, Fe or Zr may be added in combination. These compounds may be used in the forms of inorganic salt, organic salt, oxide, hydroxide, and alkoxide. The amounts of these compounds to be added can be appropriately adjusted according to the composition of the core-shell particles to be ultimately obtained.

[Reaction step]

The production method includes a reaction step which includes heating the precursor in an autoclave in a temperature range of 130°C to 180°C. In this step, heating treatment is performed in a temperature range of more preferably 140°C to 175°C, and particularly preferably 145°C to 170°C.

[Amorphous layer forming step]

The production method includes an amorphous layer forming step which includes reducing the temperature from the above temperature ranges to 50°C at a rate of 50°C/h or less. It is considered that, in this step, the temperature is reduced from the above temperature ranges over a certain period of time to accelerate dissolution and reprecipitation of the hydrous titanic acid and the silicon compound in the autoclave, whereby the Si- and Ti-containing amorphous layer is formed at the titanium oxide surfaces. The above rate is preferably up to 45°C/h, and more preferably up to 40°C/h.

The production method may include a covering layer forming step which includes further forming an amorphous covering layer on a surface of the amorphous layer. The photocatalytic activity of the particles can be further reduced by forming the amorphous covering layer. Specifically, a Zr-, Si-, or Al-containing amorphous covering layer can be formed. An example of the method that may be used to form such a covering layer includes a method which includes: dispersing particles obtained in the amorphous layer forming step in a solution obtained by dispersing or dissolving elements such as Zr, Si and Al; and heating in an autoclave in a temperature range of 100°C to 180°C. A Zr-dispersed or dissolved solution can be prepared by a method which includes mixing zirconia gel with hydrogen peroxide solution. An Si-dispersed or dissolved solution can be prepared by a method using silica sol or a method which includes diluting water glass. Further, an Al-dispersed or dissolved solution can be prepared by a method using alumina sol or a method which includes peptizing alumina gel.

The production method may include a surface treatment step which includes surface-treating the surface of the amorphous layer with an organic silicon compound. Dispersibility of particles in a solvent can be enhanced by performing surface treatment. For example, surface treatment can be performed by a method which includes: mixing a surface treatment solution containing an organic silicon compound dissolved in a polar solvent such as water or an alcohol with particles obtained by the amorphous layer forming step; then heating the mixture to a temperature of 40 to 60°C; and stirring for about 1 to 20 hours. According to this method, the organic silicon compound is hydrolyzed with water to cause surface treatment through binding between a product generated by hydrolysis and particle surfaces. The particle surfaces can be made hydrophobic or hydrophilic through this step. Examples of the organic silicon compound that may be used include monofunctional silanes such as trimethylethoxysilane, dimethylphenylethoxysilane, and dimethylvinylethoxysilane; difunctional silanes such as dimethyldiethoxysilane and diphenyldiethoxysilane; trifunctional silanes such as methacryl silane, methyltriethoxysilane, and phenyltriethoxysilane; and tetrafunctional silanes such as tetraethoxysilane. Trifunctional silanes and tetrafunctional silanes are preferably used. Surface treatment of particles with these organic silicon compounds facilitates dispersion of the particles even in an organic solvent.

This production method is capable of dispersing particles obtained in the amorphous layer forming step in various solvents. For example, a solvent of a solution containing particles obtained in the amorphous layer forming step may be replaced with another solvent. For example, known methods such as ultrafiltration and an evaporator may be used for replacement with another solvent. The type of the solvent is not limited and the solvent may be replaced with, for example, alcohols such as methanol, ethanol, butanol, propanol, and isopropyl alcohol.

EXAMPLES

The invention will be described below in further detail by way of examples. However, the invention should not be construed as being limited to these examples.

[Measurement method or evaluation method]

Measurement or evaluation of various items were performed as described below.

[1] Analysis of crystal structure of particles

A 2 g portion (solid content by mass) of a measurement sample was collected in a porcelain crucible (type B-2) and dried at 110°C for 12 hours. Its residue was then put in a desiccator and cooled to room temperature. Next, the residue was ground in a mortar and then powder X-ray diffraction was measured using an X-ray diffractometer SmartLab (manufactured by Rigaku Corporation). Details of measurement conditions and data analysis are as follows:

- Measurement conditions

  Device for measurement: Powder X-ray diffractometer SmartLab (manufactured by Rigaku Corporation)
  X-ray generator: 9 kW open tube (CuK$\alpha$ radiation source; voltage: 45 kV; current: 200 mA)
  Soller/PSC: 5.0 deg
  IS longitudinal dimension: 10.0 mm
  PSA: None
  Soller: 5.0 deg
  IS: 1/2
  RS1: 13 mm
  RS2: 20 mm
  Scan step: 0.02 deg
  Scan range: 5-70 deg
  Scan speed: 5 deg/min
  X-ray detector: High-speed 1D X-ray detector (D/TeX Ultra 250)
  Measurement atmosphere: Atmospheric air
  Sample holder: sample holder made of $Al_2O_3$ (no bottom)

- Data analysis

  Analysis software: Integrated powder X-ray analysis software PDXL2 Version 2.7.2.0 (manufactured by Rigaku Corporation)
  Smoothing: B-Splne smoothing (X threshold: 1.5)
  Background removal: Fitting method
  K$\alpha$2 removal: Intensity ratio: 0.497
  Peak search: Quadratic differential, $\alpha$ cut-off value: 3, $\alpha$ cut-off range: 0.5-20.0
  Profile fitting method: Fitting on measurement data
  Profile fitting peak shape: Split pseudo-Voigt function

[2] Analysis of shell layer

The measurement sample was diluted 20 times with methanol and subsequently dispersed by ultrasonication and put on a Cu mesh grid with a carbon support film for observation with a scanning transmission electron microscope (STEM) under the following conditions:

- Measurement conditions

  Device for measurement: Atomic resolution analytical electron microscope (JEM-ARM200F manufactured by JEOL Ltd.)
  Acceleration voltage: 120 kV
  Magnification: X5,000,000
  Single particles were extracted from an image obtained by the above observation, and were subjected to energy dispersive X-ray spectrometry for elemental mapping and line analysis under the following conditions.

- Measurement conditions

Energy dispersive X-ray spectrometry: Silicon drift detector (manufactured by JEOL Ltd.)
Elements to be detected: Ti, Si, Fe, and O

Further, on the STEM image as shown in FIG. 2, the thickness of the shell layer (amorphous layer) refers to a distance from a surface of a core particle where lattice fringes can be seen to a surface of a layer having no lattice fringe. The thickness of the shell layer was measured at 20 points per particle and simply averaged to use as the thickness of the shell layer.

[3] Average particle size

The shape of particles contained in the measurement sample was observed at an acceleration voltage of 30 kV with the use of a scanning electron microscope (SEM) (S-5500 manufactured by Hitachi High-Technologies Corporation). A sample for observation was prepared as follows: The measurement sample was diluted with water to a solid content concentration of 0.05 mass% and subsequently applied to a metallic grid with a collodion film (manufactured by Okenshoji Co., Ltd.) and irradiated with an infrared lamp at 250 W for 30 minutes for solvent evaporation to prepare the sample for observation. The resulting SEM image was printed and the particle size of 100 primary particles was measured with a caliper and averaged to use as the average particle size. In a case where a particle was anisotropic in shape, its major axis length was taken as the particle size.

[4] [Method of determining particle composition]

(Ti, Si, Fe, Zr, K)

The measurement sample was collected in a zirconia crucible and irradiated with infrared radiation for solvent removal. Subsequently dry matter obtained was melted by heating with $Na_2O_2$ and NaOH. Sulfuric acid and hydrochloric acid were further added to the resulting molten material, and water was added for dilution.
An ICP device (ICPS-8100 manufactured by Shimadzu Corporation) was used to measure the amounts of titanium, silicon, iron, zirconium, and potassium in the resulting solution in terms of their oxides ($TiO_2$, $SiO_2$, $Fe_2O_3$, $ZrO_2$, $K_2O$). Each composition was calculated based on the total mass of the resulting dry matter.

[5] [Method of measuring refractive index of particles]

Plural coatings which are different in the ratio between the measurement sample and its matrix were prepared by the method described in [0105] to [0110] of JP 2010-168266 A. The resulting coatings were subjected to measurement of reflectance spectra of the coatings and coated substrates using an optical measuring device (USPM-RU III manufactured by Olympus Corporation) to calculate the thickness and refractive index of the coatings. The particle refractive index was calculated from the refractive index of each coating.

[6] Evaluation of effect of suppressing photocatalytic activity (measurement of SY discoloration rate)

The measurement sample was mixed with water and methanol to prepare a dispersion. At that time, the Ti content (in terms of $TiO_2$) in the dispersion was 0.335 mass% and the water/methanol ratio (mass ratio) was 1/1. Then, the resulting dispersion was mixed with a glycerin solution of Sunset Yellow FCF dye having a solid content concentration of 0.02 mass% at a mass ratio (between dispersion mass / glycerin solution mass) of 1/3 to prepare a sample, and the sample was put in a quartz cell measuring 1 mm in depth, 1 cm in width, and 5 cm in height. Next, a UV lamp (LUV-6 manufactured by AS ONE Corporation) having a selected wavelength range of I rays (wavelength: 365 nm) was used to irradiate with UV light while adjusting the distance so that the intensity at the surface of the quartz cell measuring 1 cm in width and 5 cm in height became 0.4 $mW/cm^2$ (in terms of the wavelength of 365 nm).
The absorbance before UV irradiation ($A_0$) and the absorbance after n-hour UV radiation ($A_n$) of the sample at a wavelength of 490 nm were measured with a UV/VIS spectrophotometer (V-550 manufactured by JASCO Corporation) and the discoloration rate of the dye (SY discoloration rate) at a point in time after three-hour UV irradiation was calculated from the following formula:

$$SY \text{ discoloration rate} = (A_n - A_0) / A_0 \times 100 \ (\%)$$

(Example 1)

[Titanic acid aqueous solution preparing step]

A titanium tetrachloride aqueous solution (9.958 kg) containing 2 mass% of titanium tetrachloride (produced by OSAKA Titanium Technologies Co., Ltd.) in terms of $TiO_2$ was mixed with a ferric chloride aqueous solution (0.043 kg) containing 4 mass% of ferric chloride (produced by Hayashi Pure Chemical Ind., Ltd.) in terms of $Fe_2O_3$. Subsequently, the mixture was mixed with 0.889 kg of ammonia water (produced by UBE Corporation) containing 15 mass% of ammonia, to thereby prepare a pale yellow-brown slurry at a pH of 8.5. Then, the slurry was filtered. Subsequently, the residue was washed with water to obtain 1.908 kg of iron-containing hydrous titanic acid cake having a solid content concentration of 10 mass%.

Next, to the cake were added 1.510 kg of hydrogen peroxide solution (produced by Mitsubishi Gas Chemical Co., Ltd.) containing 35 mass% of hydrogen peroxide and 7.632 kg of pure water. Subsequently, the mixture was stirred at a temperature of 80°C for 1 hour to obtain 11.050 kg of an iron-containing titanic acid peroxide aqueous solution containing 2 mass% in total of titanium and iron in terms of $TiO_2$ and $Fe_2O_3$, respectively. The iron-containing titanic acid peroxide aqueous solution was transparent yellow-brown in color and had a pH of 8.5.

[Precursor preparing step]

Then, 11.050 kg of the iron-containing titanic acid peroxide aqueous solution was mixed with 0.190 kg of silica sol (SN-350 produced by JGC Catalysts and Chemicals Ltd.) and 2.747 kg of pure water to obtain a precursor.

[Reaction step]

Then, the precursor was heated in an autoclave at a temperature of 150°C for 6 hours.

[Amorphous layer forming step]

Next, the autoclave was cooled to 50°C at a temperature reduction rate of 30°C/h. Subsequently, the solution after reaction was concentrated using an ultrafiltration membrane device to obtain 2.153 kg of a hydrosol having a solid content of 10 mass%. A 0.440 kg portion of the hydrosol was concentrated to a solid content of 20 mass% to obtain 0.218 kg of a concentrated sol.

[Surface treatment step]

To a surface treatment solution obtained by dissolving 0.033 kg of methacryl silane serving as an organic silicon compound in 0.218 kg of a commercially available methanol serving as a polar solvent, 0.218 kg of the concentrated sol obtained in the above step was added with stirring, and the mixture was then heated at a temperature of 50°C for 6 hours to prepare a surface-treated sol. Then, the solvent contained in the surface-treated sol was replaced with methanol to obtain a dispersion containing core-shell particles dispersed in the solvent. The core-shell particles dispersed in the dispersion were subjected to measurement by the same method as in Example 1. The results are shown in Table 1.

[Example 2]

The same method as in Example 1 was repeated except that the amount of silica sol to be added was doubled, thereby obtaining a dispersion containing core-shell particles dispersed in a solvent. The core-shell particles dispersed in the dispersion were subjected to measurement by the same method as in Example 1. The results are shown in Table 1.

[Example 3]

The same method as in Example 1 was repeated except that the amount of silica sol to be added was reduced to half, thereby obtaining a dispersion containing core-shell particles dispersed in a solvent. The core-shell particles dispersed in the dispersion were subjected to measurement by the same method as in Example 1. The results are shown in Table 1.

[Example 4]

[Titanic acid aqueous solution preparing step]

A titanium tetrachloride aqueous solution (352 g) containing 2 mass% of titanium tetrachloride (produced by OSAKA Titanium Technologies Co., Ltd.) in terms of $TiO_2$ was mixed with ammonia water (33.4 g; produced by UBE Corporation) containing 15 mass% of ammonia to prepare a pale yellow-brown slurry at a pH of 8.5. Then, the slurry was filtered. Subsequently, the residue was washed with water to obtain 288 g of hydrous titanic acid cake having a solid content concentration of 4.81 mass%.

Next, 288 g of the hydrous titanic acid cake was mixed with 405 g of pure water and then 110 g of hydrogen peroxide solution (produced by Mitsubishi Gas Chemical Co., Ltd.) containing 35 mass% of hydrogen peroxide was added. Subsequently, the mixture was stirred at a temperature of 80°C for 1 hour to obtain a titanic acid peroxide aqueous solution containing 2 mass% of titanium in terms of $TiO_2$. The titanic acid peroxide aqueous solution was transparent yellow-brown in color and had a pH of 8.9.

[Precursor preparing step]

Then, 804 g of the titanic acid peroxide aqueous solution was mixed with 14.2 g of silica sol (SN-350 produced by JGC Catalysts and Chemicals Ltd.) and 1.36 g of ammonia water containing 15 mass% of ammonia to obtain a precursor.

[Reaction step]

Then, the precursor was heated in an autoclave at a temperature of 150°C for 6 hours.

[Amorphous layer forming step]

Next, the autoclave was cooled to 50°C at a temperature reduction rate of 50°C/h. Subsequently, the solution after reaction was concentrated using an ultrafiltration membrane device to obtain 161 g of a concentrated sol (concentrated sol A) having a solid content of 10 mass%.

[Zr, Si covering layer forming step]

Zirconia gel (5.77 g; produced by JGC Catalysts and Chemicals Ltd.) containing 10 mass% of zirconia in terms of $ZrO_2$ was mixed with 49.4 g of pure water and then 1.11 g of potassium hydroxide (KOH concentration: 85 mass%) was added and mixed. Next, 11.03 g of hydrogen peroxide solution containing 35 mass% of hydrogen peroxide was added, and the mixture was heated to prepare 67.3 g of a solution of zirconium in hydrogen peroxide (zirconium-dissolved solution A) containing 0.5 mass% of zirconium in terms of $ZrO_2$. Next, commercially available water glass was diluted with pure water to prepare 133.6 g of a silicic acid solution (silicic acid solution A) containing 2 mass% of silicon in terms of $SiO_2$.

To 60.7 g of the concentrated sol A was added 507 g of pure water and the mixture was heated to 90°C, and 67.3 g of the zirconium-dissolved solution A and 133.6 g of the silicic acid solution A were added to obtain a mixture solution. The mixture solution was heated in an autoclave at a temperature of 165°C for 18 hours. The mixture solution after the heating treatment was recovered and concentrated to obtain a transparent concentrated sol (concentrated sol B) having a solid content of 10 mass% and being pale milky white in color.

[Surface treatment step]

The concentrated sol B obtained in the above step was used to perform surface treatment by the same method as in Example 1, thereby obtaining a dispersion containing core-shell particles dispersed in a solvent. The core-shell particles dispersed in the dispersion were subjected to measurement by the same method as in Example 1. The results are shown in Table 1.

[Example 5]

The same method as in Example 4 was repeated to prepare 161 g of the concentrated sol A.

[Zr, Si covering layer forming step]

The same method as in Example 4 was repeated to prepare 19.8 g of the zirconium-dissolved solution A and 25 g of the silicic acid solution A. To 152 g of the concentrated sol A was added 608 g of pure water to adjust the solid content concentration to 2 mass%. Subsequently, the mixture was heated to 90°C and 19.8 g of the zirconium-dissolved solution A and 25 g of the silicic acid solution A were added. Subsequently, the mixture solution was heated in an autoclave at a temperature of 165°C for 18 hours. The mixture solution after the heating treatment was concentrated to obtain a concentrated sol C having a solid content of 10 mass% and being pale milky white in color.

The concentrated sol C obtained in the above step was used to perform surface treatment by the same method as in Example 1, thereby obtaining a dispersion containing core-shell particles dispersed in a solvent. The core-shell particles dispersed in the dispersion were subjected to measurement by the same method as in Example 1. The results are shown in Table 1.

[Comparative Example 1]

The same method as in Example 1 was repeated except that silica sol was not used and the temperature reduction rate was set to 60°C/h, thereby obtaining a dispersion containing core-shell particles dispersed in a solvent. The core-shell particles dispersed in the dispersion were subjected to measurement by the same method as in Example 1. The results are shown in Table 1.

[Table 1]

| | | | Example 1 | Example 2 | Example 3 | Example 4 | Example 5 | Comparative Example 1 |
|---|---|---|---|---|---|---|---|---|
| Core-shell particle | Core particle | Component | Titanium oxide | Titanium oxide | Titanium oxide | Titanium oxide | Titanium oxide | Titanium oxide |
| | | Crystal structure | Anatase | Anatase | Anatase | Anatase | Anatase | Anatase |
| | Shell | Amorphous layer | contain Si,Ti | Contain Si,Ti | Contain Si,Ti | Contain Si,Ti,Zr,K | Contain Si,Ti,Zr,K | Only Si |
| | | Si/Ti signal ratio | 1.5 | 3.1 | 0.6 | 1.3 | 0.8 | 0 |
| | | Thickness | 1.4nm | 2.3nm | 1nm | 2.2nm | 1.6 nm | 1.4nm |
| | Composition | Ti($TiO_2$ mass% ) | 81.8 | 73.5 | 86.6 | 47.9 | 78.5 | 92.1 |
| | | Si($SiO_2$ mass% ) | 17.6 | 25.9 | 12.7 | 36.9 | 19.5 | 7.2 |
| | | Fe($Fe_2O_3$ mass% ) | 0.7 | 0.6 | 0.7 | - | - | 0.8 |
| | | Zr($ZrO_2$ mass% ) | - | - | - | 12.5 | 1.4 | - |
| | | K($K_2O$ mass% ) | - | - | - | 2.7 | 0.6 | - |
| | Average particle size | | 10nm | 10nm | 10nm | 10nm | 10nm | 10nm |
| | Particle refractive index | | 2.07 | 1.98 | 2.13 | 1.77 | 2.03 | 2.20 |
| | SY discoloration rate (3hrs) | | 9% | 4% | 25% | 5% | 25% | 71% |

In the core-shell particles in Comparative Example 1 in which the amorphous layer only contained Si, the particle refractive index was as high as 2.20 but the SY discoloration rate was also as high as 71% and their photocatalytic activity was also high. In contrast, in the core-shell particles in Example 1 in which the amorphous layer contained Si and Ti, the particle refractive index was more or less low but the SY discoloration rate was extremely low and their photocatalytic activity was low. From the viewpoint of the ratio between the particle refractive index and the SY discoloration rate, the core-shell particles in Example 1 had a ratio of 2.07/9 = 0.23, whereas those in Comparative Example 1 had a ratio of 2.2/71 = 0.03, which revealed that the core-shell particles in Example 1 had an extremely high particle refractive index with respect to their photocatalytic activity. It was revealed that the core-shell particles in Example 2, Example 3, Example 4, and Example 5 in which the ratio was, as in Example 1, 0.49, 0.08, 0.35, and 0.08, respectively, had a higher particle refractive index than those in Comparative Examples 1 with respect to the photocatalytic activity.

**Claims**

1. Core-shell particles, each comprising:

    a core particle composed of crystalline titanium oxide; and
    a shell having an Si- and Ti-containing amorphous layer.

2. The particles according to claim 1, wherein the amorphous layer has a ratio of Si to Ti ranging from 0.1 to 10 in terms of signal ratio obtained by energy dispersive X-ray spectrometry.

3. The particles according to claim 2, wherein the amorphous layer has a thickness of 0.1 nm to 5 nm.

4. The particles according to claim 3, wherein the particles have an average particle size of 5 nm or more but 50 nm or less.

5. The particles according to claim 4, wherein the crystalline titanium oxide contains at least one element selected from the group consisting of Al, Si, Fe, and Zr.

6. The particles according to claim 5, wherein the crystalline titanium oxide has an anatase crystal structure.

7. The particles according to claim 6, wherein the crystalline titanium oxide does not contain Sn.

8. A dispersion obtained by dispersing the particles according to any one of claims 1 to 7 in a solvent.

9. A coating containing the particles according to any one of claims 1 to 7.

10. A base material comprising the coating according to claim 9.

# FIG.1

SHELL : AMORPHOUS LAYER
( Si / Ti )

CORE PARTICLE :
CRYSTALLINE TITANIUM OXIDE

FIG.2

## FIG.3

10 nm

FIG.4

10 nm                    Si K

FIG.5

10 nm                                    Ti K

FIG.6

10 nm                    Fe K

FIG.7

10 nm                    O K

# FIG.8

DARK FIELD STEM IMAGE

## INTERNATIONAL SEARCH REPORT

| International application No. |
|---|
| **PCT/JP2023/035454** |

| A. | CLASSIFICATION OF SUBJECT MATTER |
|---|---|

***C01G 23/053***(2006.01)i
FI: C01G23/053

According to International Patent Classification (IPC) or to both national classification and IPC

| B. | FIELDS SEARCHED |
|---|---|

Minimum documentation searched (classification system followed by classification symbols)

C01G23/053

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2009-155496 A (JGC CATALYSTS & CHEMICALS LTD) 16 July 2009 (2009-07-16) examples 1-2 | 1-10 |
| A | JP 2008-230964 A (ISHIHARA SANGYO KAISHA LTD) 02 October 2008 (2008-10-02) paragraph [0023] | 1-10 |
| A | JP 8-143312 A (UBE NITTO KASEI CO LTD) 04 June 1996 (1996-06-04) paragraphs [0011]-[0013] | 1-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/035454**

| Patent document cited in search report | | | Publication date (day/month/year) | Patent family member(s) | Publication date (day/month/year) |
|---|---|---|---|---|---|
| JP | 2009-155496 | A | 16 July 2009 | (Family: none) | |
| JP | 2008-230964 | A | 02 October 2008 | (Family: none) | |
| JP | 8-143312 | A | 04 June 1996 | US 6013369 A<br>paragraphs [0046], [0047], [0053], [0060]<br>WO 1996/015986 A1<br>paragraphs [0039], [0046], [0053]<br>TW 343224 B<br>KR 10-1997-0700634 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006146131 A
- JP 2004018311 A
- JP 2011037659 A
- JP 2010168266 A